(19) Europäisches Patentamt
European Patent Office
Office européen des brevets

(11) EP 3 333 219 A1

# (12) EUROPEAN PATENT APPLICATION

(43) Date of publication:
**13.06.2018 Bulletin 2018/24**

(21) Application number: **16202939.1**

(22) Date of filing: **08.12.2016**

(51) Int Cl.:
***C08K 5/101*** *(2006.01)* ***C08K 5/12*** *(2006.01)*
***C08L 27/06*** *(2006.01)* ***C08K 5/00*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
- **SCG Chemicals Co., Ltd.**
  **Bangkok 10800 (TH)**
- **Thai Plastic and Chemicals Public Co., Ltd.**
  **Bangkok 10800 (TH)**

(72) Inventors:
- **Tiyapiboonchaiya, Churat**
  **10800 Bangkok (TH)**
- **Sae-lim, Chantana**
  **10800 Bangkok (TH)**

(74) Representative: **Kador & Partner**
**Corneliusstraße 15**
**80469 München (DE)**

## (54) PLASTICIZER COMPOSITION

(57) The present invention relates to a plasticizer composition comprising a plasticizer (A) having a viscosity of not less than 100 cP at 25oC and an ester (B) having the following formula (I):

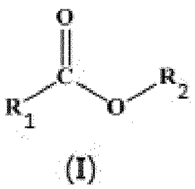

(I)

wherein R1 and R2 are the same or different and represent a straight chain, branched or cyclic hydrocarbyl group.

EP 3 333 219 A1

## Description

FIELD OF THE INVENTION

The present invention relates to a plasticizer composition comprising a plasticizer having a viscosity of not less than 100 cP at 25°C and a ester that are suitable for plasticizing polymers such as vinyl polymer, halogen- containing polymer, chlorosulfonated polyethylene, cellulose ester, acrylic polymer, polyacetal, polystyrene, polyamide, polyolefins, or the mixture thereof.

BACKGROUND OF THE INVENTION

Plasticizers are added to materials to make them softer and more flexible. The choice of plasticizer is dependent upon various factors such as the performance specifications of the finished products, cost, the concern of negative environmental impact and potential adverse health effects in humans, etc. For products designed for applications at elevated temperatures, plasticizers having low volatility, good compatibility and low migration tendency such as trimellitate esters or polymeric plasticizers are preference. For products designed where the impact on the environment and human health are of concern, high molecular weight bio-based plasticizers have been increasing interest.

However, these plasticizers show high viscosity which causes difficulty in processing such as quite difficult to pump to the compounder, take long time for mixing, low productivity, difficult to mix with polymer and other additives which lead to heterogeneous mixture and the defect points on the finished products, etc.

There are many attempts to solve this problem such as preheating these high viscosity plasticizers prior to the dry blending step to reduce the time required to complete the dry blending step, or blending with other low volatility phthalate plasticizer such as benzyl butyl phthalate (BBP), dioctyl phthalate (DOP) or diisononyl phthalate (DINP) to shorten the mixing time and reduce viscosity but this makes some key advantages of high viscosity plasticizers drop and makes the finished product contained phthalate which is prohibited in some countries especially in Europe.

US20130210974A1 and US3354176A disclose a PVC composition using plasticizer composition comprising trimellitate plasticizers and phthalates plasticizers.

US8007918B2 disclose plasticizer composition comprising trioctyl trimellitate and diundecyl phthalate for cellulose esters.

US20060263556A1 disclose vinyl acetate-vinyl laurate copolymer using plasticizer composition comprising trimellitate and adipate plasticizer.

US6468258B1 disclose plastic compositions for medical containers comprising polyvinyl chloride, vitamin E, citrate ester, tri-(2-ethylhexyl) trimellitate (TEHTM or TOTM) and epoxidised oil.

Despite all the above-mentioned work, an efficient plasticizer, which can enhance processability, plasticizer absorption speed, electrical volume resistivity and also reduce defect point of the plasticized polymer at comparable strength, heat stability properties, weight stability at high temperature, migration, brittleness temperature, and is still being sought.

It has surprisingly been found that this object can be achieved by a plasticizer composition comprising:

a) a plasticizer (A) having a viscosity of not less than 100 cP and
b) an ester (B) having the following formula (I):

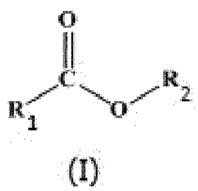

(I)

wherein $R_1$ and $R_2$ are the same or different and represent a straight chain, branched or cyclic hydrocarbyl group.

SUMMARY

A first embodiment of the present invention relates to a plasticizer composition comprising a plasticizer (A) having a viscosity of not less than 100 cP at 25°C and an ester (B) having the following formula (I):

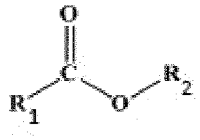

(I)

wherein $R_1$ and $R_2$ are the same or different and represent a straight chain, branched or cyclic hydrocarbyl group.

Another embodiment of the present invention relates to a polymer composition comprising at least one polymer selected from the group consisting of vinyl polymer, halogen-containing polymer, chlorosulfonated polyethylene, cellulose ester, acrylic polymer, polyacetal, polystyrene, polyamide, polyolefins, or the mixture thereof, and a plasticizer composition comprising a plasticizer (A) having a viscosity of not less than 100 cP at 25°C and an ester (B) having the following formula (I):

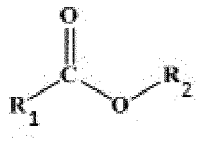

(I)

wherein $R_1$ and $R_2$ are the same or different and represent a straight chain, branched or cyclic hydrocarbyl group.

DETAILED DESCRIPTION

A plasticizer composition comprising a plasticizer (A) having a viscosity of not less than 100 cP at 25°C and an ester (B) having the following formula (I):

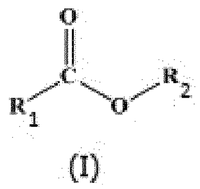

(I)

wherein $R_1$ and $R_2$ are the same or different and represent a straight chain, branched or cyclic hydrocarbyl group, preferably alkyl group. $R_1$ and $R_2$ may have from 1 to 15 carbon atoms. Preferably, $R_1$ is an alkyl group having from 1 to 12 carbon atoms, more preferably from 2 to 8 carbon atoms, and most preferably from 5 to 7 carbon atoms.
R2 is an alkyl group having from 7 to 15 carbon atoms, more preferably from 8 to 14 carbon atoms, and most preferably from 8 to 10 carbon atoms.

Most preferably, the ester of formula (I) has 11 to 23 carbon atoms. If the ester of formula (I)
has less than 11 carbon atoms, it will be more volatile at room temperature. On the contrary, if the ester of formula (I) has a number of carbon atoms greater than 23, it will be in solid form at room temperature resulting in poorer processability of and compatibility with the polymer resin.

The plasticizer (A) having a viscosity of not less than 100 cP, preferably in the range of 100 to 3,000 cP, is selected from trimellitate plasticizer, polymeric plasticizer, bio-based plasticizer or the mixture thereof.

The trimellitate plasticizers are selected from tri-2-ethylhexyl trimellitate (TEHTM or TOTM), triisononyl trimellitate (TINTM), trimethyl trimellitate (TMTM), tri-(n-octyl,n-decyl) trimellitate (ATM), tri-(heptyl,nonyl) trimellitate (LTM), n-octyl trimellitate (OTM) or a mixture thereof.

The polymeric plasticizer are selected from linear and/or branched polyester, ethylenevinyl acetate-carbon monoxide products, copolymers of butadiene with acrylonitrile, acrylic acid esters, and fumaric acid esters.

The polyester plasticizers are the reaction product of adipic, azelaic, faty acids, mixed dibasic, phthalic, sebacic, succinic or glutaric acids and alcohol, glycol or polyhydric. Example of the polyester plasticizers are adipic acid polyesters and adipic acid ether polyesters.

The bio-based plasticizer are selected from isosorbide ester, sugar alcohol, acetylated fatty ester, acetylated oil, epoxidised fatty ester, epoxidised oil and isosorbide diester. Mixtures of the plasticizer and the ester (B) of formula (I) can comprise any ratio of the plasticizer and the ester (B). A suitable mixture could include the plasticizer in an amount of from 80% to 99.7% by weight, preferably 90% to 99% by weight, more preferably in an amount of from 92% to 98.5%,

and most preferably in an amount of from 92% to 97% by weight with respect to the total amount of the plasticizer composition. Likewise, a suitable mixture could include the ester (B) in an amount of from 0.3% to 20% by weight, preferably 1% to 10% by weight, more preferably in an amount of from 1.5% to 8%, and most preferably in an amount of from 3% to 8% by weight with respect to the total amount of the plasticizer composition. In an embodiment, the plasticizer composition consists of a mixture of the plasticizer and the ester (B) in any of the above described embodiments with respect to the total amount of the plasticizer composition.

The potential use of the plasticizer composition of the present invention is the use as plasticizer for various polymer resins such as vinyl polymer, halogen-containing polymer, chlorosulfonated polyethylene, cellulose ester, acrylic polymer, polyacetal, polystyrene, polyamide, polyolefins, or the mixture thereof, preferably acrylate elastomer, polyvinyl butyral, polyvinyl chloride, epichlorohydrin, chlorosulfonated polyethylene, cellulose-acetate butyrate, most preferably polyvinyl chloride.

The plasticizer composition of the present invention provides ease of processing resulting in excellent compatibility with the polymer, especially polyvinyl chloride. This is due to a low viscosity of said plasticizer composition where the ester of formula (I) acts as a viscosity reducer and an absorption speed improver for the high viscosity plasticizer.

Another embodiment of the present invention relates to a polymer composition comprising at least one polymer and a plasticizer composition comprising a plasticizer (A) having a viscosity not less than 100 cP and an ester (B) of formula (I).

The polymer of this embodiment is selected from the group consisting of vinyl polymer, halogen-containing polymer, chlorosulfonated polyethylene, cellulose ester, acrylic polymer, polyacetal, polystyrene, polyamide, polyolefins, or mixtures thereof, preferably acrylate elastomer, polyvinyl butyral, polyvinyl chloride, epichlorohydrin, chlorosulfonated polyethylene, cellulose-acetate butyrate, most preferably polyvinyl chloride.

In the polymer composition of this embodiment, the plasticizer composition comprising the plasticizer (A) and the ester (B) may be used in any of the embodiments as described herein before.

The polymer composition of this invention preferably comprises 1 to 120 parts by weight of the plasticizer composition per 100 parts by weight of polymer, more preferably comprises 40 to 90 parts by weight per 100 parts by weight of the polymer.

The polymer composition of this invention is easily processed, mixed or formed due to the fact that said plasticizer composition has a low viscosity and a good compatibility with the polymer and, thus, helps to reduce the polymer viscosity while processing, mixing or forming said polymer composition. Then, the mixing time and cooling time can also be reduced, in which a homogeneous distribution still is obtained, resulting in improved energy saving and higher productivity. Moreover, this polymer composition has a lower defect point, and higher electrical volume resistivity.

The polymer composition of this present invention further comprises at least one additive
selected from the group consisting of fillers, extenders, pigments, thermal stabilizers, UV stabilizers, viscosity regulators, rheological additives, foam formers, foam stabilizers, antistatic agent, impact modifiers and lubricants.

The polymer composition of the invention can be used for the production of compounds, electric wire/cable compounds, wiring harness, sheets, tapes, films, food packages, hoses, auto parts, seal liners, gasket, medical supplies, construction materials, household items, shoes, floor materials, synthetic leathers, tarpaulins, wallpapers, toys, etc.

In the following, the invention is further illustrated by way of examples.

## Methods and definitions

1. Determination of plasticizer composition viscosity

The viscosity of the plasticizer composition is determined according to ASTM D2196 (Brookfield viscometer), testing at 25°C and using spindle no. 0.

2. Determination of plasticizer absorption time

Plasticizer absorption time is determined by the procedure of ASTM D2396-88. The time taken from the addition of the plasticizer until the kneading torque of the planetary mixer reached a minimum is measured as plasticizer absorption time.

3. Determination of physical properties of the polymer composites

a) Hardness
The specimen with thickness of 3 mm is measured according to ASTM D2240 with a hardness tester or durometer

(Type A) at five different positions on the specimen and the average value was reported.

b) Migration is a measure of the plasticizer migration content.

The specimen with thickness of 1 mm is heated in an oven at 70°C for 10 days and %migration was calculated by the following formula:

$$\%\ \text{Migration} = \frac{\text{Weight before oven} - \text{Weight after oven}}{\text{Weight before oven}} \text{ x } 100$$

c) Volume resistivity (VR) is a measure of the electrical volume resistance of the polymer compositions.

Volume resistivity is determined according to ASTM D257. The specimen with thickness of 2 mm is placed between two electrodes. For sixty seconds, a voltage is applied and the resistance is measured. Surface or volume resistivity is calculated, and apparent value is given (60 seconds electrification time).

d) Heat stability is a measure of the endurance of the polymer composite to the heat.

Heat stability is determined by Metastat machine at 200°C and 200 minutes. The specimen thickness of 1 mm is visually inspected for discoloration and other signs of degradation. The time of the specimen start to change the color (initial discoloration) and the time of the specimen start to burn (burnt discoloration) are recorded.

e) Weight stability (%Weight loss) is a measure of the decomposition of polymer compositions after heating.

The specimen with thickness of 1 mm is punched into dumbbell shape and then heated at 100°C for 168 hours and the %weight loss was calculated as below.

$$\text{Weight loss } (\%) = \frac{(\text{Weight of specimen before aging} - \text{Weight of specimen after aging}) \text{ x } 100}{\text{Weight of specimen before aging}}$$

f) The yellowness index is a measure of yellow discoloration of a specimen.

The specimen with thickness of 1 mm is measured by the Data color machine 600TM according to ASTM D9125.

g) Tensile strength and %Elongation

Tensile strength and elongation is measured by JIS K6723. The specimen in dumbbell shape is extended at the cross head speed of 200 mm/min by using the test machine U.T.M. The breaking point is measured. Tensile strength and Elongation are calculated by the following formula.

$$\text{Tensile strength } \left(\frac{\text{kgf}}{\text{mm}^2}\right) = \frac{\text{Load value (kgf)}}{\text{Width (mm)x Thickness (mm)}}$$

$$\%\ \text{Elongation} = \frac{\text{Extension}}{\text{Primary length}} \text{ x } 100$$

h) % Retention of tensile strength and elongation

The specimen in dumbbell shape with thickness of 1 mm is heated by oven at 80 or 100°C for 168 hours before measuring the tensile strength and elongation according to JIS K6723. The % retention of tensile strength and elongation are calculated as by the following formula.

$$\text{Retention of tensile strength } (\%) = \frac{\text{Tensile strength of specimen after aging x } 100}{\text{Tensile strengthof specimen before aging}}$$

$$\text{Retention of elongation } (\%) = \frac{\%\text{Elongationof specimen after aging x } 100}{\%\text{Elongation of specimen before aging}}$$

i) Brittleness temperature is a measure of the temperature where the polymer composition endures low temperatures before the brittleness is found. The lower the brittleness temperature, the higher the endurance of the polymer composite regards low temperatures.

The specimen with thickness of 2 mm is measured using the Clash and Berg test (ASTM D746 brittleness test) during the temperature range from -30 to -50 °C by temperature rate 2 °C /min.

j) Defect points are a surface defect that results from unmelted material appearing on the surface of a specimen. Numbers of defects points are counted.

**The abbreviations used in the below tables have the following meanings:**

PVC : polyvinyl chloride resin

TOTM : Tri(2-ethylhexyl) trimellitate

DOTP: di(2-ethylhexyl) terephthalate

DINP : di-isononyl phthalate

2EHB : 2-ethylhexyl butyrate

2EHH : 2-ethylhexyl hexanoate

DDP : dodecyl proprionate

TDP : tetradecyl proprionate

Hereinafter, the present invention is described in more detail through the following examples and comparative examples. However, the following examples are only for the understanding of the present invention, and the present invention is not limited to the following examples.

**First embodiment**

Plasticizer compositions of this invention and the comparative plasticizers were prepared by stirring the mixtures at 40 rpm and ambient temperature for 5 minutes. Then, the properties were evaluated as presented in Table 1.

Table 1

| | Example (%weight of total plasticizer composition weight) | | | | | | | | | | | | |
|---|---|---|---|---|---|---|---|---|---|---|---|---|---|
| | IE1 | IE2 | IE3 | IE4 | IE5 | IE6 | IE7 | IE8 | CE1 | CE2 | CE3 | CE4 | CE5 |
| TOTM | 96.2 | 98.0 | 96.2 | 95.0 | 93.0 | 96.2 | 96.2 | - | 100.0 | 96.2 | 96.2 | 96.2 | - |
| 2EHB | 3.8 | - | - | - | - | - | - | - | - | - | - | - | - |
| 2EHH | - | 2.0 | 3.8 | 5.0 | 7.0 | - | - | 3.8 | - | - | - | - | - |
| DDP | - | - | - | - | - | 3.8 | - | - | - | - | - | - | - |
| TDP | - | - | - | - | - | - | 3.8 | - | - | - | - | - | - |
| DINP | - | - | - | - | - | - | - | - | - | 3.8 | - | - | - |
| DOTP | - | - | - | - | - | - | - | - | - | - | 3.8 | - | - |
| Adipic acid polyester | - | - | - | - | - | - | - | 96.2 | - | - | - | 3.8 | 100.0 |
| Viscosity* (cP) | 113 | 130 | 121 | 118 | 106 | 132 | 145 | 1664 | 172 | 155 | 161 | 170 | 2480 |
| Plasticizer absorption time (second) | 133 | 127 | 117 | 113 | 104 | 133 | 131 | 105 | 136 | 136 | 141 | 135 | 111 |

*The viscosity of IE1-7 and CE1-5 were measured at rotational speed 2 rpm whereas the viscosity of IE8 and CE5 were measured at rotational speed 30 rpm.

As apparent from Table 1, the presence of ester (B) of formula (I) with TOTM (IE1-7) results in lower viscosity and shorter plasticizer absorption time than TOTM solely (CE1). The higher the amounts of ester (B) of formula (I), the lower viscosities and shorter plasticizer absorption time of the plasticizer compositions are found. At the same amount of second plasticizer, the plasticizer composition comprising TOTM and an ester (B) of formula (I) (IE1, IE3, IE6 and IE7) has lower viscosity and shorter plasticizer absorption time than the plasticizer composition comprising TOTM and DINP (CE2), the plasticizer composition comprising TOTM and DOTP (CE3), and the plasticizer composition comprising DOTP and polyester (CE4). These will lead to easier processing of plasticized polymer based on the plasticizer composition of this invention compared to the comparative plasticizers.

Table 1 also shows that the very high viscosity of polyester plasticizer (CE5) is significantly reduced when mixing polyester plasticizer with ester of formula (I) (IE8).

Lower viscosity and shorter plasticizer absorption time using plasticizers composition comprising TOTM or polyester plasticizer and the ester (B) of formula (I) lead to faster processing time.

**Second embodiment**

Polymer compositions for high heat resistant cable application were prepared according to the materials and amounts as shown in Table 2. The components were dry blended and then mixed by a mixing roll at 160°C for 4 minutes to prepare a polyvinyl chloride composition sheet for testing heat stability. For testing the other properties, the composition sheets were compressed by compression molding at 180°C for 5 minutes to a predetermined size. The results were shown in Table 2.

From Table 2, the polymer compositions containing TOTM and ester (B) of formula (I) (polymer compositions 1-6) show less defect points than the polymer compositions containing TOTM solely (polymer composition 7). The higher the amounts of ester (B) of formula (I), the less defect points can be observed and the tensile strength tends to be increased. The addition of ester (B) of formula (I) in plasticizer composition provides higher electrical volume resistance comparing to the addition of the other second plasticizers (polymer composition 8-10) whereas the properties such as tensile strength, heat stability, weight stability, migration stay at comparable levels. It is also found that the polymer composition containing TOTM and polyester plasticizer (polymer composition 10) shows electrical volume resistivity and heat stability properties significantly worse than the polymer compositions containing TOTM and ester (B) of formula (I).

Table 2

| | Polymer composition no. | | | | | | | | | |
|---|---|---|---|---|---|---|---|---|---|---|
| | 1 | 2 | 3 | 4 | 5 | 6 | 7 | 8 | 9 | 10 |
| Ingredients (part bv weight) | | | | | | | | | | |
| PVC | 100 | 100 | 100 | 100 | 100 | 100 | 100 | 100 | 100 | 100 |
| Calcium carbonate | 30 | 30 | 30 | 30 | 30 | 30 | 30 | 30 | 30 | 30 |
| Calcium zinc stabilizer | 4 | 4 | 4 | 4 | 4 | 4 | 4 | 4 | 4 | 4 |
| IE1 | 50 | | | | | | | | | |
| IE2 | | 50 | | | | | | | | |
| IE3 | | | 50 | | | | | | | |
| IE4 | | | | 50 | | | | | | |
| IE5 | | | | | 50 | | | | | |
| IE6 | | | | | | 50 | | | | |
| CE1 | | | | | | | 50 | | | |
| CE2 | | | | | | | | 50 | | |
| CE3 | | | | | | | | | 50 | |
| CE4 | | | | | | | | | | 50 |
| Properties | | | | | | | | | | |
| Hardness[1] | 89 | 88 | 89 | 89 | 89 | 89 | 89 | 89 | 89 | 88 |
| Defect point (Point)** | 20 | 20 | 14 | 11 | 9 | 11 | 25 | 17 | 17 | 18 |

(continued)

| Properties | | | | | | | | | | |
|---|---|---|---|---|---|---|---|---|---|---|
| Yellowness Index* | 10 | 10 | 10 | 10 | 10 | 10 | 10 | 10 | 10 | 10 |
| Tensile strength ($kg/cm^2$)** | 223 | 235 | 228 | 239 | 242 | 212 | 223 | 226 | 226 | 224 |
| Elongation (%)** | 297 | 278 | 296 | 273 | 268 | 288 | 302 | 309 | 298 | 299 |
| Migration (%)* | 0.5 | 0.6 | 0.5 | 0.6 | 0.6 | 0.7 | 0.5 | 0.6 | 0.5 | 0.5 |
| Volume resistivity (x $10^{13}$ ohm.cm) ** | 83 | 90 | 99 | 89 | 85 | 75 | 77 | 64 | 60 | 34 |
| Heat stability** | | | | | | | | | | |
| - Initial color (min) | 75 | 75 | 75 | 75 | 75 | 75 | 75 | 75 | 75 | - |
| - Burnt color (min) | 105 | 105 | 105 | 105 | 100 | 105 | 105 | 105 | 105 | 60 |
| Heat aging at 80°C** | | | | | | | | | | |
| - Retention of tensile strength (%) | 100 | 93 | 99 | 93 | 94 | 100 | 97 | 97 | 100 | 100 |
| - Retention of elongation (%) | 94 | 100 | 95 | 100 | 100 | 95 | 93 | 91 | 100 | 97 |
| Heat aging at 100°C** | | | | | | | | | | |
| - Retention of tensile strength (%) | 98 | 94 | 98 | 96 | 97 | 95 | 97 | 100 | 96 | 100 |
| - Retention of elongation (%) | 93 | 100 | 93 | 100 | 100 | 90 | 92 | 95 | 91 | 94 |
| Weight loss (%)* | | | | | | | | | | |
| -at 80°C | 0 | 0 | 0 | 0 | 0 | 0 | 0 | 0 | 0 | 0 |
| -at 100°C | 0 | 0 | 0 | 0 | 0 | 0 | 0 | 0.4 | 0 | 0 |
| Brittleness temperature (°C)* | -20.6 | -19.6 | -18.5 | -19.8 | -20.0 | -20.2 | -18.3 | -19.8 | -20.4 | -20.4 |

[1]The hardness is the control parameter at value 88 ± 2.
*The lower value, the more favorable the resulting composition
** The higher value, the more favorable the resulting composition

## Claims

**1.** A plasticizer composition comprising:

a) a plasticizer (A) having a viscosity of not less than 100 cP at 25°C and
b) an ester (B) having the following formula (I):

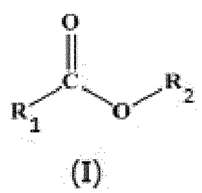

(I)

wherein $R_1$ and $R_2$ are the same or different and represent a straight chain, branched or cyclic hydrocarbyl group.

**2.** The plasticizer composition according to claim 1 wherein $R_1$ and $R_2$ in formula (I) are the same or different and represent a straight chain or branched alkyl group.

**3.** The plasticizer composition according to claims 1 or 2 wherein $R_1$ and $R_2$ in formula (I) independently from each other have from 1 to 15 carbon atoms.

**4.** The plasticizer composition according to any of the preceding claims, wherein $R_1$ is an alkyl group having from 1 to 12 carbon atoms.

**5.** The plasticizer composition according to any of the preceding claims, wherein $R_2$ is an alkyl group having from 7 to 15 carbon atoms.

**6.** The plasticizer composition according to any of the preceding claims, wherein the plasticizer (A) is selected from trimellitate plasticizer, polymeric plasticizer, bio-based plasticizer or the mixture thereof.

**7.** The plasticizer composition of any one of the preceding claims, wherein the plasticizer (A) is present in an amount of from 80% to 99.7% by weight with respect to the total amount of the plasticizer composition.

**8.** The plasticizer composition according to claim 7, wherein the plasticizer (A) is present in an amount of from 90% to 99% by weight with respect to the total amount of the plasticizer composition.

**9.** The plasticizer composition of any one of the preceding claims, wherein the ester (B) is present in an amount of from 0.3% to 20% by weight with respect to the total amount of the plasticizer composition.

**10.** The plasticizer composition according to claim 9, wherein the ester (B) is present in an amount of from 1% to 10% by weight with respect to the total amount of the plasticizer composition.

**11.** Use of the plasticizer composition according any one of the preceding claims for vinyl polymer, halogen-containing polymer, chlorosulfonated polyethylene, cellulose ester, acrylic polymer, polyacetal, polystyrene, polyamide, polyolefins, or the mixture thereof, preferably acrylate elastomer, polyvinyl butyral, polyvinyl chloride, epichlorohydrin, chlorosulfonated polyethylene, cellulose-acetate butyrate, most preferably polyvinyl chloride.

**12.** A polymer composition comprising at least one polymer selected from the group consisting of vinyl polymer, halogen-containing polymer, chlorosulfonated polyethylene, cellulose ester, acrylic polymer, polyacetal, polystyrene, polyamide, polyolefins, or the mixture thereof, and a plasticizer composition according to any one of claims 1 to 10.

**13.** The polymer composition of claim 12, wherein the polymer is polyvinyl chloride.

**14.** The polymer composition according to any of claims 12 or 13, wherein the plasticizer composition is present in an amount of 1 to 120 parts per 100 parts by weight of polymer, preferably 40 to 90 parts per 100 parts by weight of polymer.

**15.** The polymer composition of any of claims 12 to 14, further comprising at least one additive selected from the group consisting of fillers, extenders, pigments, thermal stabilizers, UV stabilizers, viscosity regulators, rheological additives, foam formers, foam stabilizers, antistatic agent, impact modifiers and lubricants.

Europäisches Patentamt
European Patent Office
Office européen des brevets

# EUROPEAN SEARCH REPORT

Application Number
EP 16 20 2939

| Category | Citation of document with indication, where appropriate, of relevant passages | Relevant to claim | CLASSIFICATION OF THE APPLICATION (IPC) |
|---|---|---|---|
| X | WO 2011/110350 A1 (EMERY OLEOCHEMICALS GMBH [DE]; DAUTE PETER [DE]; SCHAEFER MARTIN [DE];) 15 September 2011 (2011-09-15) * page 2, lines 15-31 * * page 3, line 23 - page 4, line 26 * * page 4, line 28 - page 6, line 13 * * page 6, lines 15-32 * * page 7, line 1 - page 8, line 10 * *P2 and P3 in the Tables on pages 13 and 14*; examples | 1-15 | INV. C08K5/101 C08K5/12 C08L27/06 C08K5/00 |
| Y | WO 2011/122646 A1 (FUJIFILM CORP [JP]; NAGAI TAKAYASU; SAWAI DAISUKE; NORO MASAKI; INADA) 6 October 2011 (2011-10-06) * abstract * | 1-15 | |
| Y | US 5 968 619 A (CARMEN RALEIGH A [US] ET AL) 19 October 1999 (1999-10-19) * table I * | 1-15 | TECHNICAL FIELDS SEARCHED (IPC) |
| A | LAKEEV S N ET AL: "Ester plasticizers for polyvinyl chloride", RUSSIAN JOURNAL OF APPLIED CHEMISTRY, PLEIADES PUBLISHING / SPRINGER, NEW YORK, NY, US, vol. 89, no. 1, 15 May 2016 (2016-05-15), pages 1-15, XP035930995, ISSN: 1070-4272, DOI: 10.1134/S1070427216010018 [retrieved on 2016-05-15] * abstract * | 1-15 | C08K C08L |

The present search report has been drawn up for all claims

1

| Place of search | Date of completion of the search | Examiner |
|---|---|---|
| Munich | 9 June 2017 | Gerber, Myriam |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 16 20 2939

This annex lists the patent family members relating to the patent documents cited in the above-mentioned European search report. The members are as contained in the European Patent Office EDP file on
The European Patent Office is in no way liable for these particulars which are merely given for the purpose of information.

09-06-2017

| Patent document cited in search report | Publication date | Patent family member(s) | Publication date |
|---|---|---|---|
| WO 2011110350 A1 | 15-09-2011 | DE 102010010985 A1 | 15-09-2011 |
| | | WO 2011110350 A1 | 15-09-2011 |
| WO 2011122646 A1 | 06-10-2011 | JP 2011225845 A | 10-11-2011 |
| | | WO 2011122646 A1 | 06-10-2011 |
| US 5968619 A | 19-10-1999 | AT 405935 B | 27-12-1999 |
| | | AU 706636 B2 | 17-06-1999 |
| | | BE 1009364 A6 | 04-02-1997 |
| | | DE 19622318 A1 | 12-12-1996 |
| | | FR 2735029 A1 | 13-12-1996 |
| | | GB 2301822 A | 18-12-1996 |
| | | IE 960420 A1 | 11-12-1996 |
| | | NL 1003268 C2 | 01-09-1998 |
| | | US 5721024 A | 24-02-1998 |
| | | US 5968619 A | 19-10-1999 |
| | | US 6060138 A | 09-05-2000 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20130210974 A1
- US 3354176 A
- US 8007918 B2
- US 20060263556 A1
- US 6468258 B1